(19) Europäisches Patentamt
European Patent Office
Office européen des brevets

(11) EP 4 329 085 A1

(12) EUROPEAN PATENT APPLICATION

(43) Date of publication:
28.02.2024 Bulletin 2024/09

(51) International Patent Classification (IPC):
H01M 50/571 (2021.01)     H01M 50/572 (2021.01)
H01M 10/42 (2006.01)      H01M 50/119 (2021.01)
H01M 50/204 (2021.01)     H01M 50/224 (2021.01)
H01M 50/249 (2021.01)

(21) Application number: 22192381.6

(22) Date of filing: 26.08.2022

(52) Cooperative Patent Classification (CPC):
H01M 50/572; H01M 10/4207; H01M 50/119;
H01M 50/204; H01M 50/224; H01M 50/249;
H01M 50/571; H01M 2200/00; H01M 2220/20

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: Scania CV AB
151 87 Södertälje (SE)

(72) Inventor: LINDSTRÖM, Johan
61137 Nyköping (SE)

(74) Representative: Scania CV AB
Patents, GP 117kv
151 87 Södertälje (SE)

(54) **PROTECTION DEVICE FOR PROPULSION BATTERIES AGAINST CONDUCTIVE ENERGY DISCHARGE**

(57)     The present application relates to a protection device against electrical discharge through a human body, which protection device comprises a conductive element (40) electrically connected between a cathode (14) of a battery cell (12) of a vehicle propulsion battery module (10) and a metal casing (20) surrounding said battery cell (12), which conductive element (40) displays electrical resistive properties for limiting stray capacitance energy through a human body if a person comes in contact with a conductor of the battery cell (12).

Fig. 5

EP 4 329 085 A1

**Description**

TECHNICAL AREA

The present application relates to the build-up of stray capacitances in large propulsion battery systems for electrically driven vehicles.

BACKGROUND OF INVENTION

When developing heavy electric vehicles such as trucks, lorries and busses, large battery systems are required for providing the necessary capacity and driving range between charging. These battery systems comprise battery packs with a number of battery modules, where each module comprises a plurality of battery cells. Each cell is built up by an anode and a cathode separated by a separator an immersed in an electrolyte solution, that may be placed in a metal casing. The cells can be either prismatic or cylindrical. The cells are assembled or stacked in compartments, often called modules, to form battery units. These battery units are then often placed together in structures to form battery packs. Large vehicles requiring large amounts of energy often have several battery packs placed in different locations on the vehicle in order to distribute the weight and also be able to handle the battery packs during maintenance or replacement.

Since many of the battery cells have metal casings, often of aluminium, there is a risk of corrosion in the cell. In order to handle this, the casing is often connected galvanically to the cathode of the cell. This is often done by welding the cathode to the aluminium casing, thereby providing a galvanic contact of very low ohm.

Even though the issue with corrosion is handled by this solution, the connection of low ohm results in that stray capacitances are built up between the vehicle propulsion electrical system and the ground of the vehicle, to which the metal casing of the battery modules or packs are connected. There is thus a risk of a discharge of the stray capacitance if a person comes in contact with a conductor of the electrical vehicle propulsion system.

The danger with a discharge of the stray capacitance increases with the size of the battery system. This is because the stray capacitance is created between the surfaces between the earth of the chassis, i.e. the casings of the modules and the casing of the cells, forming a plurality of plate capacitors and since the large battery systems comprise a very large number of cells, the stray capacitance can be quite significant. This can be understood by the equation of the capacitance for a plate capacitor:

$$C = \varepsilon \frac{A}{d}$$

where $d$ is the distance between plates, in the case with batteries the distance between the cells and the surrounding metal casings of the modules. $A$ is the area where two plates meet and $\varepsilon$ is the permittivity of the isolating material. In order to create as compact as possible battery systems, there is a desire to minimize the size of the battery packs, wherein the distance between the cells and the module casings is reduced, and as seen from the above equation, reduction of the distance $d$, will lead to increased stray capacitance values.

With large battery systems, there is a risk that the discharge of stray capacitance can reach levels that can be lethal to humans, if the discharge passes a human body that comes in contact with a conductor. There is further a desire to increase the operating voltage of the battery systems, in particular with large capacity systems. However, an increase in the voltage leads to an increase in the discharge energy because the discharge energy is a function of $U^2$, thus even further increasing the risk of lethal situations. This may in particular be the case during maintenance of the vehicle, removing or replacing battery modules. There is thus a challenge to balance the desire of compact battery systems with large capacity and higher voltages with the safety aspect regarding stray capacitance in those systems.

BRIEF DESCRIPTION OF INVENTION

The present application aims to reduce the risk of personal injuries as described above. This aim is solved by a protection device according to the independent patent claim. Preferable embodiments form the subject of the dependent patent claims.

According to main aspect, a protection device against electrical discharge through a human body is provided, which protection device may comprise a conductive element electrically connected between a cathode of a battery cell of a vehicle propulsion battery module and a metal casing surrounding the battery cell, which conductive element may display electrical resistive properties for limiting stray capacitance energy through a human body if a person comes in contact with a conductor of the battery cell.

This solution will limit the discharge current caused by the stray capacitance between the cell casings and the surfaces of the modules, wherein released energy of the stray capacitance through a person coming in electrical contact with the battery system is reduced due to the division of voltage between the inner resistance of the person and the resistance of the conductive elements.

The conductive element of the protection device may comprise an electrical resistor. Further, in relation to the inner resistance of a human, the conductive element may display an electrical resistance of at least 100 Ohm.

According to a further aspect, a battery cell for a vehicle propulsion battery is provided, which battery cell may be provided with a metal casing and comprising a protection device as described above. In this regard, a cathode of the battery cell may have a galvanic connection to the metal casing.

According to yet an aspect, a battery module comprising several battery cells is provided, where at least a majority of the battery cells may be provided with a protection device as described above. Further, the battery module may comprise a metal casing connectable to the ground of an electric vehicle. Preferably, several such battery modules may be comprised in a propulsion battery system. In this regard, the capacity of the propulsion battery system may be larger than 300 kWh, because larger propulsion battery systems increase the levels of discharge energy and therefore require protection devices as described above.

These and other aspects of, and advantages with, the present invention will become apparent from the following detailed description of the invention and from the accompanying drawings.

BRIEF DESCRIPTION OF DRAWINGS

In the following detailed description of the invention, reference will be made to the accompanying drawings, of which

Fig. 1 is a schematic cross-sectional side view of a propulsion battery module;

Figs. 2-3 are schematic views from above of the propulsion battery module of Fig. 1,

Fig. 4 is a schematic view of addition of stray capacitance in a propulsion battery module of Fig. 1,

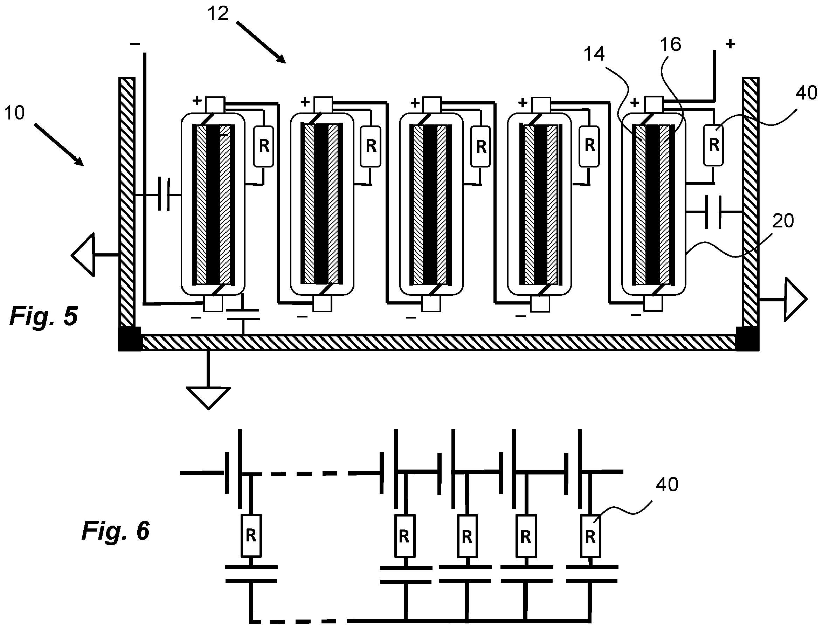

Fig. 5 is a view of the module provided with a protection device according to the present application,

Fig. 6 is a view corresponding to Fig. 4 with the protection device according to the application, and

Fig. 7 is a schematic side view of an electrical vehicle that may be provided with the protection device according to the application.

DETAILED DESCRIPTION OF THE INVENTION

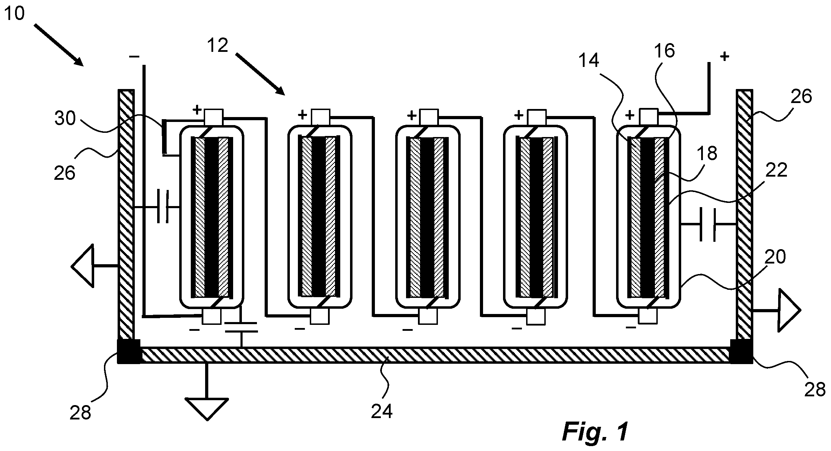

Fig. 1 shows schematically a battery module 10 to be comprised in a battery system for propelling a vehicle, comprising a plurality of Li-Ion battery cells 12. Each cell 12 comprises a cathode plate 14 and an anode plate 16 with a separator sheet 18 between the cathode and the anode. The plates and sheet are placed in a metal casing 20, usually of aluminium, and the casing 20 is filled with an electrolyte solution. Separators 22 are also arranged between the plates 14, 16 and the casing 20. The casing 20 could be cylindrical or rectangular. The cathode plate 14 and the anode plate 16 are each provided with a tab or connection point for electrical connection with other cells for forming a battery module 10. A module 10 is often comprised of generally rectangular metal casing with a bottom 24 and sides 26. These surfaces are often separated by insulating material 28. The module is then closed by an upper cover (not shown). The metal casing of the module 10 is further electrically connected to the ground of the vehicle.

A number of battery modules are then inter-connected electrically in parallel and series for forming propulsion battery packs for electrically driven vehicles. For large and heavy vehicles, the total capacity of the battery packs of a battery system for a vehicle is often above 300 kWh and this means that several battery packs are installed in the vehicle.

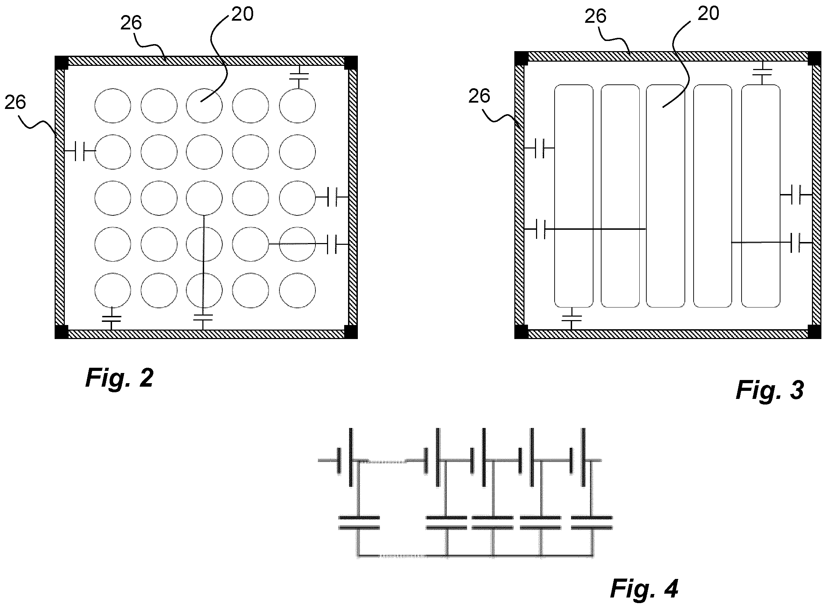

In order to prevent galvanic corrosion in the Li-Ion cells 12, the cathode 14 of each cell is provided with a galvanic connection 30 to its casing 20, Fig. 1, in order to obtain a galvanic contact with a very low ohm value. This low ohm contact gives rise to stray capacitance between the propulsion battery system and the earth of the vehicle. The stray capacitance is formed between the cell casings 20 of the cells arranged in the module 10 and the surfaces 24, 26 of the modules, the bottom and sides, that function as plate capacitors, see Figs. 2 and 3, showing cylindrical and prismatic cells. According to Thevenin's theorem, the capacitance influence from all surfaces are added regardless if they have different potential from the battery cells. Hence, each and all of the surfaces of the cell casings will interact with the surfaces of the module, creating stray capacitances that are added, as seen in Fig. 4.

For large battery systems as mentioned above, with large areas from the casings of the plurality of modules, the stray capacitance value can be quite considerable, and can pose a serious risk of injury if a person comes in contact with a conductor of the propulsion battery system and a discharge of stray capacitance passes through the person's body.

In order to reduce the risk of a discharge of stray capacitance through a human body in an above scenario, a protection device is provided. It comprises a conductive element 40 connected between the cathode of the battery cell and its metal casing as seen in Fig. 1. The conductive element 40 is provided with an electrical resistance which limits the discharge current caused by the stray capacitance between the cell casings and the surfaces of the modules, wherein released energy of the stray capacitance through a person coming in electrical contact with the battery system is reduced due to the division of voltage between the inner resistance of the person (from about 500 ohm) and the resistance of the conductive elements. Preferably, the conductive element 40 is provided with a resistance of generally 100 ohm or higher. The conductive element could be a resistor.

As a high safety measure, all cells of a module may be provided with such a conductive element. However, depending on the size of the modules and the number of modules, the stray capacitance generated may not be so high that all cells in a module need to be provided with this conductive element. This will have to be assessed for each type and size of battery system and vehicle.

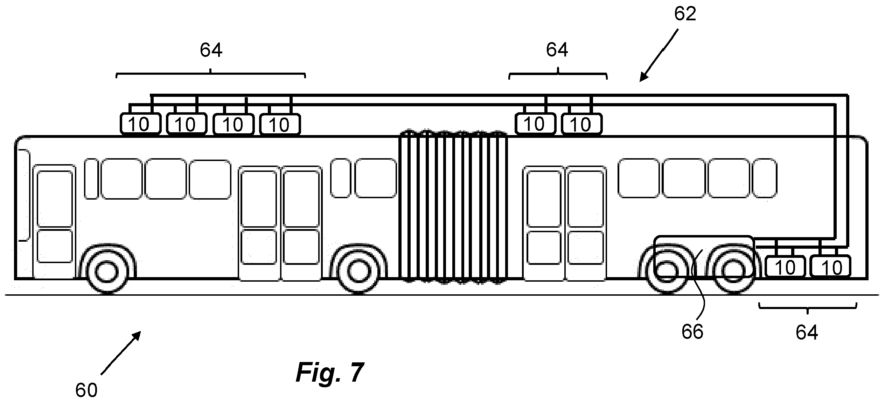

Fig. 7 shows an example of an electrically driven vehicle 60, here an articulated commuter bus is shown. As seen, the bus is arranged with a propulsion battery system 62 comprising a number of battery packs 64, in turn comprising a number of battery modules 10 placed on different locations, both on the roof and adjacent an electric machine 66 for propelling the vehicle. This type of vehicle requires a large number of battery cells for providing the energy capacity needed. In this context, it is important to utilize the solution according the application for minimizing the effect of stray capacitance in order to greatly reduce the risk of serious adverse effects if a person comes in contact with a conductor of the battery system. It is however to be understood that insulation of the conductors of a battery system for vehicles is the main protection against electrical shocks and that the present application is an additional safety measure.

It is to be understood that the embodiment described above and shown in the drawing is to be regarded only as a non-limiting example and that the present application can be modified in many ways within the scope of the patent claims.

## Claims

1. Protection device against electrical discharge through a human body, which protection device comprises a conductive element (40) electrically connected between a cathode (14) of a battery cell (12) of a vehicle propulsion battery module (10) and a metal casing (20) surrounding said battery cell (12), which conductive element (40) displays electrical resistive properties for limiting stray capacitance energy through a human body if a person comes in contact with a conductor of the battery cell (12).

2. Protection device according to claim 1, wherein the conductive element (40) comprises an electrical resistor.

3. Protection device according to claim 1 or 2, wherein said conductive element (40) displays an electrical resistance of at least 100 Ohm.

4. Battery cell for a vehicle propulsion battery, which battery cell is provided with a metal casing (20) and comprising a protection device according to claims 1 - 3.

5. Battery cell according to claim 4, wherein a cathode (14) of the battery cell (12) has a galvanic connection (30) to said metal casing (20).

6. Battery module (10) comprising several battery cells (12), where at least a majority of the battery cells (12) are provided with a protection device according to claims 1-5.

7. Battery module (10) according to claim 6, comprising a metal casing (24, 26) connectable to the ground of an electric vehicle.

8. Propulsion battery system (62) comprising several battery modules (10) according to claims 6-7.

9. Propulsion battery system (62) according to claim 8, wherein the capacity of the propulsion battery system (62) is larger than 300 kWh.

10. Vehicle (60) comprising a propulsion battery system (62) according to claim 8 or 9.

Fig. 1

**Fig. 3**

**Fig. 4**

**Fig. 2**

Fig. 5

Fig. 6

64    64    62

10  10  10  10    10  10

10  10

66    64

**Fig. 7**

60

8

Europäisches
Patentamt

European
Patent Office

Office européen
des brevets

## EUROPEAN SEARCH REPORT

Application Number

EP 22 19 2381

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 113 764 834 A (CHINA LITHIUM BATTERY TECH CO LTD) 7 December 2021 (2021-12-07) <br> * paragraphs [0002] – [0012], [0028] – [0070] * <br> * figures 1-8 * | 1-10 | INV. <br> H01M50/571 <br> H01M50/572 <br> H01M10/42 <br> H01M50/119 <br> H01M50/204 |
| A | US 10 686 178 B1 (HALL JONATHAN L [US] ET AL) 16 June 2020 (2020-06-16) <br> * column 8, lines 43-58 * <br> * figure 6B * <br> * abstract * | 1-10 | H01M50/224 <br> H01M50/249 |
| A | US 6 117 584 A (HOFFMAN JOSEPH A [US] ET AL) 12 September 2000 (2000-09-12) <br> * abstract * | 1-10 | |

TECHNICAL FIELDS
SEARCHED      (IPC)

H01M

The present search report has been drawn up for all claims

| Place of search | Date of completion of the search | Examiner |
|---|---|---|
| Munich | 25 January 2023 | Mercedes González |

EPO FORM 1503 03.82 (P04C01)

## ANNEX TO THE EUROPEAN SEARCH REPORT
## ON EUROPEAN PATENT APPLICATION NO.

EP 22 19 2381

This annex lists the patent family members relating to the patent documents cited in the above-mentioned European search report.
The members are as contained in the European Patent Office EDP file on
The European Patent Office is in no way liable for these particulars which are merely given for the purpose of information.

25-01-2023

| Patent document cited in search report | | Publication date | Patent family member(s) | | Publication date |
|---|---|---|---|---|---|
| CN 113764834 | A | 07-12-2021 | NONE | | |
| US 10686178 | B1 | 16-06-2020 | US | 10686178 B1 | 16-06-2020 |
| | | | US | 2020303712 A1 | 24-09-2020 |
| US 6117584 | A | 12-09-2000 | AU | 8584398 A | 16-02-1999 |
| | | | CA | 2297845 A1 | 04-02-1999 |
| | | | DE | 69824005 T2 | 23-06-2005 |
| | | | EP | 0998766 A1 | 10-05-2000 |
| | | | JP | 4593773 B2 | 08-12-2010 |
| | | | JP | 2001511595 A | 14-08-2001 |
| | | | US | 6117584 A | 12-09-2000 |
| | | | WO | 9905749 A1 | 04-02-1999 |

EPO FORM P0459

For more details about this annex : see Official Journal of the European Patent Office, No. 12/82